# EUROPÄISCHE PATENTSCHRIFT

(11) **EP 2 965 606 B1**
(45) Veröffentlichungstag und Bekanntmachung des Hinweises auf die Patenterteilung: **28.06.2017**
(21) Anmeldenummer: 15401063.1
(22) Anmeldetag: 06.07.2015
(51) Int. Cl.: A01C 5/06

(54) **DOPPELSCHEIBENSCHAR**
DOUBLE DISK COULTER
SOC À DOUBLE DISQUE

(30) Priorität: 08.07.2014 DE 102014109487
(43) Veröffentlichungstag der Anmeldung: 13.01.2016
(73) Patentinhaber: Amazonen-Werke H. Dreyer GmbH & Co. KG, 49205 Hasbergen (DE)
(72) Erfinder: Fankhauser, Carlos Fernando, 27798 Hude (DE)

(56) Entgegenhaltungen:
- WO-A1-02/15665
- US-A- 1 204 239
- US-A- 3 886 875
- US-B1- 6 578 502

## Beschreibung

Die Erfindung betrifft eine Doppelscheibenschar mit zwei Scharscheiben, die mittels auf einer Lagerachse angeordneter Lagerelemente drehbar an einem Scharhalter gelagert sind.

Solche Doppelscheibenschare sind aus dem Stand der Technik bekannt. Ein solches Doppelscheibenschar wird beispielsweise in der US 12 04 239 beschrieben. Hier ist der Scheibenlagerung ein Stellelement zugeordnet, mittels welchem der Abstand zwischen den Scharscheiben im eingebauten Zustand der Doppelscheibenschar verstellbar ist. Im gelösten Zustand des als Schraubverbindung ausgebildeten Stellelementes wirkt eine Federanordnung. Die Wirkung der Federanordnung auf die Einstellung der Scharscheiben zueinander wird durch das Festziehen der Scharverbindung aufgehoben. Beispielsweise wird in der EP 2 422 599 ein weiteres Doppelscheibenschar beschrieben.

Bei Doppelscheibenscharen müssen sich die Scharscheiben in dem in Fahrtrichtung vorderen Bereich des Eingriffes der Scharscheiben in den Boden berühren, um eine geschlossene Vorderkante zu bilden. Im Laufe des Einsatzes verschleißen die Scheiben aber und ihr Durchmesser nimmt ab, so dass sie sich im vorderen Bereich nicht mehr berühren und keine geschlossenen Vorderkanten mehr bilden. Dann muss eine Demontage der Doppelscheibenschar erfolgen und es müssen Ausgleichsscheiben entfernt werden, damit die Scheiben wieder dichter zueinander angeordnet werden können und im vorderen Bereich wieder eine geschlossene Kante bilden. Durch das Auseinanderbauen ist das Nachstellen daher aufwendig.

Es ist daher Aufgabe der Erfindung, eine Doppelscheibenschar bereitzustellen, bei der der Scheibenschluss im Bereich der Vorderkante in einfacher Weise erhalten werden kann.

Diese Aufgabe wird bei der Doppelscheibenschar der eingangs genannten Art erfindungsgemäß durch die Merkmale des Kennzeichens des Anspruches 1 gelöst.

Eine solche Doppelscheibenschar ermöglicht ein einfaches Nachstellen der Position der Scharscheiben, ohne dass die Schar auseinander gebaut werden muss.

Die Scharscheiben sind derart federbeaufschlagt, dass sie permanent aufeinander zu gedrückt werden, das heißt, dass auf jede Scharscheibe eine Federkraft jeweils in Richtung der anderen Scharscheibe ausgeübt wird. Die Federkraft kann direkt oder indirekt auf die Scharscheibe ausgeübt werden, insbesondere indirekt, beispielsweise über die Lagerachse und/oder die Lager. Dies verhindert ein Auseinanderdriften der Scharscheiben.

Das Stellelement kann mindestens einen bewegbaren Teil umfassen, insbesondere einen entlang des Scharhalters bewegbaren Teil, wobei der bewegbare Teil derart ausgebildet ist, dass beim Bewegen der Abstand zwischen den Scharscheiben veränderbar ist. Insbesondere können die Lagerelemente entlang der bzw. parallel zur Lagerachse bewegbar sein.

Wenn die Lagerelemente mit dem Stellelement verschoben werden, insbesondere entlang der Lagerachse, werden entsprechend auch die Scharscheiben voneinander weg oder aufeinander zu bewegt. Wenn sich beispielsweise der Durchmesser der Scharscheiben durch die Abnutzung reduziert hat, genügt es, die Scharscheiben wieder näher aneinander zu führen, so dass sie wieder eine geschlossene V-Form bilden.

Die Doppelscheibenschar kann mindestens zwei Federelemente umfassen, wobei die Federelemente jeweils zwischen einem Fortsatz der Lagerachse und dem Scharhalter derart angeordnet sind, dass sie eine Rückstellkraft auf den Fortsatz der Lagerachse und den Scharhalter ausüben, und wobei die jeweilige Achse der Federelemente insbesondere im Wesentlichen parallel zur Lagerachse liegt.

Solche Federelemente verhindern, dass die Scharscheiben auseinanderdriften, denn sie werden über den Fortsatz durch die Rückstellkraft der Federn ständig kraftbeaufschlagt und damit aneinandergedrückt bzw. gezogen.

Das Stellelement und die Federelemente können derart ausgebildet sein, dass die Scharscheiben V-förmig zueinander angeordnet werden können.

Das lagerachsenseitige Ende des Stellelements kann kegelförmig, stumpfkegelförmig oder keilförmig ausgebildet sein. Diese Anordnung ermöglicht eine kontinuierlich verstellbare Spreizung der Achsscheiben.

Das Stellelement kann mindestens zweiteilig ausgebildet sein, wobei ein erster Teil des Stellelements eine Schraube umfasst, die drehbar ortsfest angeordnet ist und ein erstes Gewinde umfasst, wobei ein zweiter Teil des Stellelements ein zweites Gewinde umfasst, unverdrehbar angeordnet ist und, insbesondere entlang des Scharhalters, bewegbar ist, und wobei das erste und das zweite Gewinde derart wechselwirken, dass durch Drehen der Schraube der zweite Teil des Stellelements je nach Drehrichtung in entgegengesetzte Richtungen bewegt wird.

Ein Verdrehen des zweiten Teils des Stellelements kann beispielsweise aufgrund der Reibung zwischen dem zweiten Teil und dem Scharhalter erfolgen oder eine Führung kann im Scharhalter vorgesehen sein.

Der zweite Teil des Stellelements kann am lagerachsenseitigen Ende kegelförmig, stumpfkegelförmig oder keilförmig ausgebildet sein.

Ein solches Stellelement ermöglicht, dass die Schraube nicht aus der Doppelscheibenschar hervorsteht bzw. darin versenkt wird. Des Weiteren wird einer starken Verschmutzung von außen vorgebeugt.

Zumindest ein Teil der Lagerachse kann zweiteilig ausgebildet sein und der zweite Teil des Stellelements kann zumindest teilweise zwischen die beiden Teile der Lagerachse ragen, derart dass abhängig davon, wie weit der zweite Teil des Stellelements zwischen die beiden Teile ragt, der Abstand zwischen den beiden Teilen unterschiedlich ist.

Insbesondere kann die Lagerachse einen bezüglich des Scharhalters nicht bewegbar angeordneten Teil und einen Teil mit zwei entlang des nicht bewegbaren Teils bewegbaren, auf entgegengesetzten Seiten des Scharhalters angeordneten Spreizelementen umfassen. Die Spreizelemente können sich dabei weiter in Richtung Scharscheiben erstrecken als der nicht bewegbare Teil.

Der oben erwähnte Fortsatz der Lagerachse kann mit den Spreizelementen mechanisch verbunden, insbesondere daran befestigt oder integral mit ihnen geformt sein.

Der zweite Teil des Stellelements kann zumindest teilweise zwischen die Spreizelemente ragen, derart dass der Abstand zwischen den Spreizelementen abhängig davon ist, wie weit der zweite Teil des Stellelements zwischen die Spreizelemente ragt.

Der zweite Teil des Stellelements kann derart ausgebildet ist sein, dass der Winkel zwischen den Scharscheiben unabhängig von der Stellung des zweiten Teils des Stellelements beibehalten wird.

Insbesondere kann Form des zweiten Teils des Stellelements und des Spreizelements derart sein, dass der Winkel zwischen den Scharscheiben unabhängig von der Stellung des zweiten Teils des Stellelements beibehalten wird.

Die Scharscheiben können mittels der Lagerelemente derart gelagert sein, dass die Position der Scharscheiben beim Verändern der Position der Spreizelemente entsprechend verändert wird.

Die Doppelscheibenschar kann eine Steuereinrichtung zum automatischen Betätigen des Stellelements umfassen.

Die Merkmale und Vorteile der Erfindung werden nachfolgend anhand der Figuren weiter erläutert. Dabei zeigt
- Fig. 1: eine schematische, nicht maßstabsgetreuen Seitenansicht einer Sämaschine umfassend mehrere Säscharen,
- Fig. 2: eine schematische, nicht maßstabsgetreue Schrägansicht einer Doppelscheibenschar,
- Fig. 3a und 3b: eine schematische, nicht maßstabsgetreue Darstellungen eines Schnitts durch die Doppelscheibenschar in einer ersten Position, und
- Fig. 4a und 4b: eine schematische, nicht maßstabsgetreue Darstellungen eines Schnitts durch die Doppelscheibenschar in einer zweiten Position.

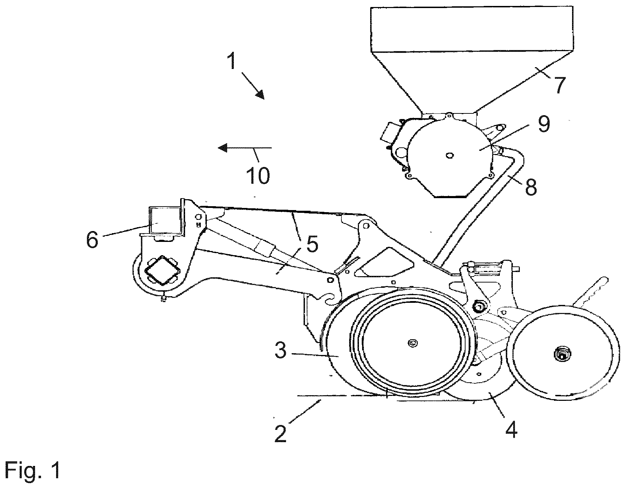

In Fig. 1 ist eine beispielhafte, nicht selbstfahrende Sämaschine 1 gezeigt, die an eine hier nicht gezeigte Zugmaschine ankoppelbar ist. Alternativ kann die Sämaschine jedoch auch selbstfahrend sein. Bei der Sämaschine sind unter anderem eine Säschar 2 mit Scharscheiben 3 und Andrückrollen 4 an einem Tragrahmen 5 befestigt und dieser ist wiederum an einem Querträger 6 befestigt. Außerdem kann die Sämaschine einen Saatgutbehälter 7 umfassen, der den Säscharen Saatgut über eine Saatgutleitung 8 zuführt. Das Saatgut kann mit einer Vereinzelungseinrichtung 9 vereinzelt werden, bevor es den Säscharen zugeführt wird. Es sei hierbei angemerkt, dass eine andere Zuführung von Saatgut zu den Säscharen ebenfalls möglich ist. Die Sämaschine bewegt sich in Fahrtrichtung 10. Die Doppelscheibenschar kann auch an einer anders ausgebildeten Sämaschine vorgesehen sein.

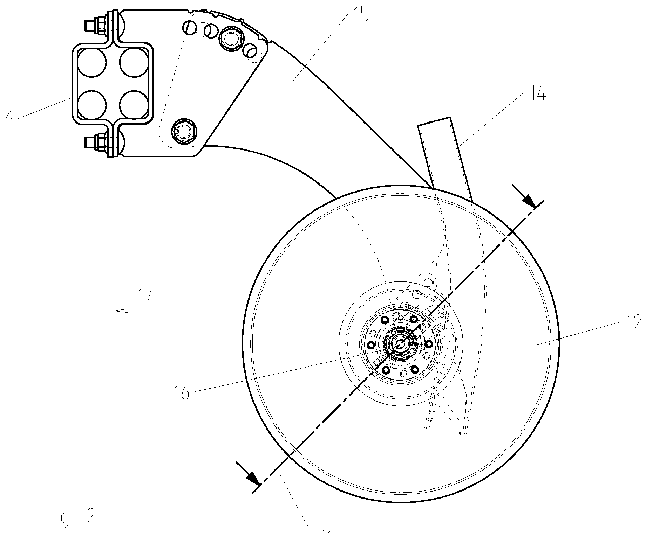

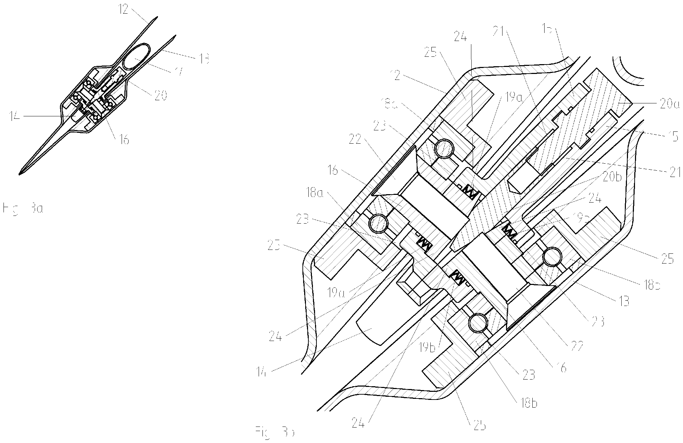

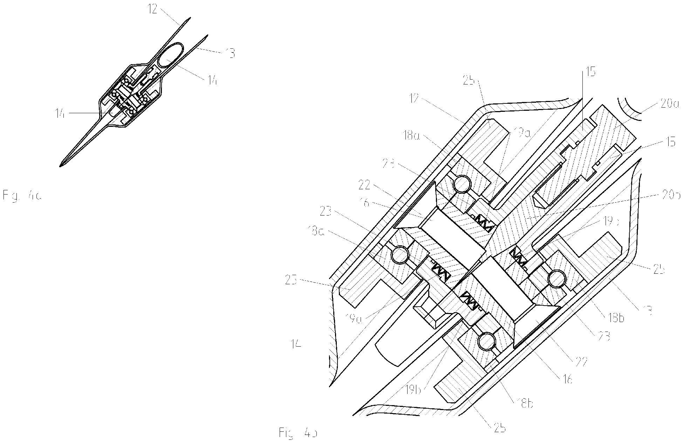

Fig. 2 zeigt eine vereinfachte Ansicht eines Teils einer Sämaschine und eine Schnittebene 11, die den in den Fig. 3 und 4 gezeigten Schnitt andeutet. Insbesondere ist hier eine von zwei V-förmig angeordneten Scharscheiben 12 und 13 abgebildet. Die Figur zeigt des Weiteren einen Teil des Querträgers 6, eine mit einem Saatgutbehälter verbindbare Saatgutleitung 14, einen Scharhalter 15, der Teil des Tragrahmens 5 ist und eine Lagerachse 16. Hier ist die Fahrtrichtung mit 17 gekennzeichnet. Die Saatgutleitung zwischen den Scharscheiben (hier nicht zu erkennen), beispielsweise wie hier gezeigt in Fahrtrichtung hinter der Lagerachse und etwas näher am Boden als die Lagerachse. Es ist jedoch ebenfalls denkbar, dass die Saatgutleitung in Fahrtrichtung vor der Lagerachse endet und auf einer Höhe mit der Lagerachse oder weiter weg vom Boden als die Lagerachse endet. Die Lagerachse ist an dem Scharhalter 15 befestigt. Die Scharscheiben sind mittels hier nicht gezeigten Lagerelementen und einer Nabe drehbar auf der Lagerachse gelagert und um diese rotierbar.

Fig. 3a und 3b zeigen einen Schnitt durch die in Fig. 2 mit 11 bezeichnete Schnittebene. In Fig. 3a sind die V-förmige Anordnung der Scharscheiben 12 und 13, sowie die Lagerachse 16 gezeigt. Außerdem ist zu erkennen, wie die Saatgutleitung 14 im Verhältnis zur Lagerachse 16 liegt, nämlich unterhalb und an der Lagerachse vorbei führend. Ein zweiteiliges Stellelement 20 ist ebenfalls gezeigt. Außerdem ist zu erkennen, dass die Saatgutleitung zwischen den Scharscheiben angeordnet ist.

Fig. 3b zeigt einen vergrößerten Ausschnitt aus der Fig. 3a. Die Scharscheiben 12 und 13 sind an Lagern 18a und 18b befestigt, in diesem Fall Kugellagern, wobei alternativ auch Gleitlager verwendet werden können. Diese liegen auf der Lagerachse 16. So sind die Scharscheiben mittels der Lager um die Lagerachse rotierbar. Des Weiteren sind zwei Federelemente 19a und 19b gezeigt, in diesem Fall eine Spiralfeder, wobei auch andere Federelemente denkbar sind. Die Lagerelemente und die Federelemente sind jeweils koaxial um die Lagerachse angeordnet. Die Federelemente befinden sich dabei zwischen einem Fortsatz 24 der Lagerachse und dem (festen) Scharhalter 15.

In der Figur ist weiterhin ein erster Teil 20a und ein zweiter Teil 20b des Stellelements 20 gezeigt. Der erste Teil 20a des Stellelements ist hier in Form einer drehbar angeordneten Schraube ausgebildet, die jedoch aufgrund von Aussparungen in dem Scharhalter 15 nicht verschiebbar ist. Am unteren Ende der Schraube ist ein Außengewinde angebracht. Der zweite Teil 20b des Stellelements umfasst ein Innengewinde und ist mittels des Innengewindes an dem Außengewinde des ersten Teils 20a befestigt. Der zweite Teil 20b ist nicht rotierbar, was durch Reibung mit dem Scharhalter oder mittels einer Führung (hier nicht gezeigt) erfolgen kann. Der zweite Teil ist zumindest stückweise zylinderförmig ausgebildet, insbesondere im Bereich des Gewindes, und läuft Richtung Lagerachse hin stumpfzylinderförmig zu. Er kann jedoch auch zylinderförmig oder keilförmig zulaufen. In dem Scharhalter 15 sind auch Aussparungen 21 für den zweiten Teil 20b des Stellelements vorgesehen, so dass dieser zur Lagerachse hin oder von der Lagerachse weg verschiebbar ist. Durch Drehen der Schraube 20a kann der zweite Teil 20b des Stellelements entlang des Lagerhalters verschoben werden, wobei die Richtung, in die es verschoben wird, von der Drehrichtung der Schraube abhängt.

Wie in der Figur gezeigt, ragt das stumpfzylinderförmige Ende des zweiten Teils 20b des Stellelements 20 zwischen zwei Spreizelemente 22, die beispielsweise Teil der Lagerachse sein können, und drückt diese auseinander bzw. spreizt sie. Die Spreizelemente wirken auf die Scharscheiben, beispielsweise indirekt mittels der Lagerelemente, die sich mit den Spreizelementen bewegen, und der auf den Lagerelementen gelagerte Nabe 25 der Scharscheiben. So werden die Scharscheiben auf einem bestimmten Abstand gebracht, der davon abhängt, wie weit das stumpfzylinderförmige Ende zwischen die Spreizelemente ragt.

Dabei werden, weil der Scharhalter fest ist, der Fortsatz 24 jedoch verschiebbar, die Federelemente 19a und 19b umso mehr gestaucht, je mehr der zweite Teil 20a zwischen die zwei Spreizelemente 22 ragt. Die so gestauchte Feder übt einen Druck auf den Fortsatz 24 aus und drückt somit den Fortsatz nach Innen (bezogen auf den durch die Scharscheiben gebildeten Raum). Zusammen mit dem Fortsatz werden auch die damit verbundenen Spreizelemente und Lagerelemente und über die Lagerelemente auch die Scharscheiben nach innen gedrückt. Daher können die Scharscheiben nicht auseinanderdriften sondern werden zusammengedrückt.

In Fig. 3 ist eine Anordnung gezeigt, in der das stumpfzylinderförmige Ende relativ weit zwischen die Spreizelemente ragt. So werden die Scharscheiben mit einem vergleichsweise großen Abstand voneinander eingestellt. Diese Einstellung wird bei einem eher geringen Verschleißzustand der Scharscheiben verswendet. Zwischen den Lagerelementen 18a und 18b und dem Scharhalter 15 ist jeweils ein Spalt 23.

Fig. 4a und 4b zeigt die gleiche Doppelscheibenschar wie Fig. 3a und 3b, wobei hier das stumpfzylinderförmige Ende des zweiten Teils 20b des Stellelements 20 weniger weit zwischen die Spreizelemente 22 ragt, als in Fig. 3. Somit spreizen die Spreizelemente die Scharscheiben 12, 13 nicht so weit auseinander wie in Fig. 3 und die Scharscheiben werden aufgrund der Federelemente aufeinander zu bewegt. Somit ist der Abstand zwischen den Scharscheiben in Fig. 4 geringer als in Fig. 3. Diese Einstellung wird bei einem eher hohen Verschleißzustand der Scharscheiben verwendet. Die Spalte 23 sind deutlich schmäler als in Fig. 4 und können insbesondere auch geschlossen werden. Die Federelemente 19a und 19b sorgen auch hier dafür, dass die Scharscheiben nicht auseinanderdriften sondern zusammengedrückt werden.

Es sei angemerkt, dass in dem obigen Beispiel die Federelemente derart gewählt werden sollten, dass sie auch dann noch gestaucht sind, wenn das stumpfzylinderförmige Ende nicht mehr oder nur minimal zwischen die Spreizelemente ragt.

Es versteht sich, dass in den zuvor beschriebenen Ausführungsbeispielen genannte Merkmale nicht auf diese spezielle Kombination beschränkt ist und auch in beliebigen anderen Kombinationen möglich ist.

## Patentansprüche

1. Doppelscheibenschar (1) mit zwei Scharscheiben (12, 13), die mittels auf einer Lagerachse (16) angeordneter Lagerelemente (18a, 18b) drehbar an einem Scharhalter (15) gelagert sind, wobei ein Stellelement (20) vorgesehen ist, mit dem der Abstand und/oder Winkel zwischen den Scharscheiben (12, 13) im zusammengebauten Zustand der Doppelscheibenschar (1) verstellbar ist, **dadurch gekennzeichnet, dass** die Scharscheiben (12, 13) derart federbeaufschlagt sind, dass sie permanent aufeinander zu gedrückt werden.

2. Doppelscheibenschar (1) nach Anspruch 1, wobei das Stellelement (20) mindestens einen, insbesondere entlang des Scharhalters (15), bewegbaren Teil (20b) umfasst, der derart ausgebildet ist, dass beim Bewegen der Abstand zwischen den Scharscheiben (12, 13) veränderbar ist.

3. Doppelscheibenschar nach einem der vorangegangenen Ansprüche, umfassend mindestens zwei Federelemente (19a, 19b), wobei die Federelemente (19a, 19b) jeweils zwischen einem Fortsatz (24) eines entlang der Lagerachse (16) bewegbaren Teils (22) der Lagerachse und dem Scharhalter (15) derart angeordnet sind, dass sie eine Rückstellkraft auf den Fortsatz (24) und den Scharhalter (15) ausüben, und wobei die jeweilige Achse der Federelemente (18a, 18b) insbesondere im Wesentlichen parallel zur Lagerachse (16) ist.

4. Doppelscheibenschar (1) nach Anspruch3, wobei das Stellelement (20) und die Federelemente (19a, 19b) derart ausgebildet sind, dass die Scharscheiben V-förmig zueinander angeordnet werden können.

5. Doppelscheibenschar (1) nach einem der Ansprüche 2 bis4, wobei das lagerachsenseitige Ende des Stellelements (20) kegelförmig, stumpfkegelförmig oder keilförmig ausgebildet ist.

6. Doppelscheibenschar (1) nach einem der Ansprüche 2 bis5, wobei das Stellelement (20) mindestens zweiteilig ausgebildet ist, wobei ein erster Teil (20a) des Stellelements (20) eine Schraube umfasst, die drehbar ortsfest angeordnet ist und ein erstes Gewinde umfasst, wobei ein zweiter Teil (20b) des Stellelements (20) ein zweites Gewinde umfasst, unverdrehbar angeordnet ist und, insbesondere entlang des Scharhalters (15), bewegbar ist, und wobei das erste und das zweite Gewinde derart wechselwirken, dass durch Drehen der Schraube der zweite Teil (20b) des Stellelements (20) je nach Drehrichtung in entgegengesetzte Richtungen bewegt wird.

7. Doppelscheibenschar (1) nach einem der vorangegangenen Ansprüche, wobei die Lagerachse (16) einen bezüglich des Scharhalters nicht bewegbar angeordneten Teil und einen Teil mit zwei entlang des nicht bewegbaren Teils bewegbaren, auf entgegengesetzten Seiten des Scharhalters (15) angeordneten Spreizelementen (22) umfasst, wobei die Spreizelemente (22) sich weiter in Richtung Scharscheiben (12, 13) erstrecken als der nicht bewegbare Teil.

8. Doppelscheibenschar (1) nach Ansprüchen 3 und7, wobei der Fortsatz (24) mit den Spreizelementen (22) mechanisch verbunden, insbesondere daran befestigt oder integral mit ihnen geformt, ist.

9. Doppelscheibenschar (1) nach Ansprüchen 6 und 7 oder Ansprüchen 6 und8, wobei der zweite Teil (20b) des Stellelements (20) zumindest teilweise zwischen die Spreizelemente (22) ragt, derart dass der Abstand zwischen den Spreizelementen (22) abhängig davon ist, wie weit der zweite Teil (20b) des Stellelements (20) zwischen die Spreizelemente (22) ragt.

10. Doppelscheibenschar (1) nach Anspruch 9, wobei der zweite Teil (20b) des Stellelements (20) derart ausgebildet ist, dass der Winkel zwischen den Scharscheiben (12, 13) unabhängig von der Stellung des zweiten Teils (20b) des Stellelements (20) beibehalten wird.

11. Doppelscheibenschar (1) nach Anspruch 9, wobei der zweiten Teil (20b) des Stellelements (20) und die Spreizelemente (22) derart ausgebildet sind, dass der Winkel zwischen den Scharscheiben (12, 13) unabhängig von der Stellung des zweiten Teils (20b) des Stellelements (20) beibehalten wird.

12. Doppelscheibenschar (1) nach einem der Ansprüche 7 bis 11, wobei die Scharscheiben (12, 13) mittels der Lagerelemente (18a, 18b) derart gelagert sind, dass die Position der Scharscheiben (12, 13) beim Verändern der Position der Spreizelemente (22) entsprechend verändert wird.

13. Doppelscheibenschar (1) nach einem der vorangegangenen Ansprüche, umfassend eine Steuereinrichtung zum automatischen Betätigen des Stellelements (20).

## Claims

1. Double disc coulter (1) having two coulter discs (12, 13) which are mounted rotatably on a coulter holder (15) by means of bearing elements (18a, 18b) which are arranged on a bearing axle (16), an actuating element (20) being provided, by way of which the spacing and/or angle between the coulter discs (12, 13) can be adjusted in the assembled state of the double disc coulter (1), **characterized in that** the coulter discs (12, 13) are spring-loaded in such a way that they are permanently pressed towards one another.

2. Double disc coulter (1) according to Claim 1, the actuating element (20) comprising at least one part (20b) which can be moved, in particular along the coulter holder (15), and is configured in such a way that the spacing between the coulter discs (12, 13) is variable during the movement.

3. Double disc coulter according to either of the preceding claims, comprising at least two spring elements (19a, 19b), the spring elements (19a, 19b) being arranged in each case between a projection (24) of a part (22) of the bearing axle which can be moved along the bearing axle (16) and the coulter holder (15) in such a way that they exert a restoring force on the projection (24) and the coulter holder (15), and the respective axis of the spring elements (18a, 18b) being, in particular, substantially parallel to the bearing axle (16).

4. Double disc coulter (1) according to Claim 3, the actuating element (20) and the spring elements (19a, 19b) being configured in such a way that the coulter discs can be arranged in a V-shaped manner with respect to one another.

5. Double disc coulter (1) according to one of Claims 2 to 4, the bearing-axle-side end of the actuating element (20) being of conical, frustoconical or wedge-shaped configuration.

6. Double disc coulter (1) according to one of Claims 2 to 5, the actuating element (20) being configured at least in two parts, a first part (20a) of the actuating element (20) comprising a bolt which is arranged rotatably in a stationary manner and comprises a first thread, a second part (20b) of the actuating element (20) comprising a second thread, being arranged such that it cannot be rotated, and being capable of being moved, in particular along the coulter holder (15), and the first and the second thread interacting in such a way that, by way of rotation of the bolt, the second part (20b) of the actuating element (20) is moved in opposite directions depending on the rotational direction.

7. Double disc coulter (1) according to one of the preceding claims, the bearing axle (16) comprising a part which is arranged such that it cannot be moved with regard to the coulter holder and a part with two spreading elements (22) which can be moved along the immovable part and are arranged on opposite sides of the coulter holder (15), the spreading elements (22) extending further in the direction of the coulter discs (12, 13) than the immovable part.

8. Double disc coulter (1) according to Claims 3 and 7, the projection (24) being connected mechanically to the spreading elements (22), in particular being fastened thereto or being formed integrally with them.

9. Double disc coulter (1) according to Claims 6 and 7 or Claims 6 and 8, the second part (20b) of the actuating element (20) protruding at least partially between the spreading elements (22) in such a way that the spacing between the spreading elements (22) is dependent on how far the second part (20b) of the actuating element (20) protrudes between the spreading elements (22).

10. Double disc coulter (1) according to Claim 9, the second part (20b) of the actuating element (20) being configured in such a way that the angle between the coulter discs (12, 13) is maintained independently of the position of the second part (20b) of the actuating element (20).

11. Double disc coulter (1) according to Claim 9, the second part (20b) of the actuating element (20) and the spreading elements (22) being configured in such a way that the angle between the coulter discs (12, 13) is maintained independently of the position of the second part (20b) of the actuating element (20).

12. Double disc coulter (1) according to one of Claims 7 to 11, the coulter discs (12, 13) being mounted by means of the bearing elements (18a, 18b) in such a way that the position of the coulter discs (12, 13) is changed correspondingly during the change of the position of the spreading elements (22).

13. Double disc coulter (1) according to one of the preceding claims, comprising a control device for automatically actuating the actuating element (20).

## Revendications

1. Soc à double disque (1) avec deux disques de soc (12, 13), qui sont montés de façon rotative sur un porte-soc (15) au moyen d'éléments de palier (18a, 18b) disposés sur un axe de palier (16), dans lequel il est prévu un élément de réglage (20), avec lequel la distance et/ou l'angle entre les disques de soc (12, 13) est réglable, dans l'état monté du soc à double disque (1), **caractérisé en ce que** les disques de soc (12, 13) sont soumis à l'action de ressorts, de telle manière qu'ils soient en permanence pressés l'un vers l'autre.

2. Soc à double disque (1) selon la revendication 1, dans lequel l'élément de réglage (20) comprend au moins une partie déplaçable (20b), de préférence le long du porte-soc (15), qui est configurée de telle manière que la distance entre les disques de soc (12, 13) soit réglable lors du déplacement.

3. Soc à double disque selon l'une quelconque des revendications précédentes, comprenant au moins deux éléments de ressort (19a, 19b), dans lequel les éléments de ressort (19a, 19b) sont disposés à chaque fois entre un prolongement (24) d'une partie (22) de l'axe de palier déplaçable le long de l'axe de palier (16) et le porte-soc (15), de telle manière qu'ils exercent une force de rappel sur le prolongement (24) et le porte-soc (15), et dans lequel l'axe respectif des éléments de ressort (18a, 18b) est en particulier essentiellement parallèle à l'axe de palier (16).

4. Soc à double disque (1) selon la revendication 3, dans lequel l'élément de réglage (20) et les éléments de ressort (19a, 19b) sont configurés de telle manière que les disques de soc puissent être disposés en forme de V l'un par rapport à l'autre.

5. Soc à double disque (1) selon l'une quelconque des revendications 2 à 4, dans lequel l'extrémité de l'élément de réglage (20) du côté de l'axe de palier est réalisée en forme de cône, de tronc de cône ou de coin.

6. Soc à double disque (1) selon l'une quelconque des revendications 2 à 5, dans lequel l'élément de réglage (20) est réalisé au moins en deux parties, dans lequel une première partie (20a) de l'élément de réglage (20) comprend une vis, qui est disposée de façon rotative et stationnaire et qui comprend un premier filet, dans lequel une deuxième partie (20b) de l'élément de réglage (20) comprend un deuxième filet, est disposée de façon non rotative et est déplaçable, en particulier le long du porte-soc (15), et dans lequel le premier et le deuxième filets interagissent de telle manière que par la rotation de la vis la deuxième partie (20b) de l'élément de réglage (20) puisse être déplacée dans des directions opposées en fonction du sens de rotation.

7. Soc à double disque (1) selon l'une quelconque des revendications précédentes, dans lequel l'axe de palier (16) comprend une partie disposée de façon non déplaçable par rapport au porte-soc et une partie comportant deux éléments expansibles (22) déplaçables le long de la partie non déplaçable et disposés sur des côtés opposés du porte-soc (15), dans lequel les éléments expansibles (22) s'étendent plus loin en direction des disques de soc (12, 13) que la partie non déplaçable.

8. Soc à double disque (1) selon les revendications 3 et 7, dans lequel le prolongement (24) est relié mécaniquement aux éléments expansibles (22), en particulier est fixé à ceux-ci ou est intégralement formé avec eux.

9. Soc à double disque (1) selon les revendications 6 et 7 ou les revendications 6 et 8, dans lequel la deuxième partie (20b) de l'élément de réglage (20) pénètre au moins partiellement entre les éléments expansibles (22), de telle manière que la distance entre les éléments expansibles (22) dépende de la quantité dont la deuxième partie (20b) de l'élément de réglage (20) pénètre entre les éléments expansibles (22).

10. Soc à double disque (1) selon la revendication 9, dans lequel la deuxième partie (20b) de l'élément de réglage (20) est configurée de telle manière que l'angle entre les disques de soc (12, 13) soit conservé indépendamment de la position de la deuxième partie (20b) de l'élément de réglage (20).

11. Soc à double disque (1) selon la revendication 9, dans lequel la deuxième partie (20b) de l'élément de réglage (20) et les éléments expansibles (22) sont configurés de telle manière que l'angle entre les disques de soc (12, 13) soit conservé indépendamment de la position de la deuxième partie (20b) de l'élément de réglage (20).

12. Soc à double disque (1) selon l'une quelconque des revendications 7 à 11, dans lequel les disques de soc (12, 13) sont montés au moyen des éléments de palier (18a, 18b), de telle manière que la position des disques de soc (12, 13) varie de façon correspondante lors d'une variation de la position des éléments expansibles (22).

13. Soc à double disque (1) selon l'une quelconque des revendications précédentes, comprenant un dispositif de commande pour l'actionnement automatique de l'élément de réglage (20).
